# EUROPEAN PATENT APPLICATION

(11) **EP 1 244 261 A2**
(43) Date of publication of application: **25.09.2002**
(21) Application number: 02251850.0
(22) Date of filing: 14.03.2002
(51) Int. Cl.: H04L 12/66, H04Q 7/22

(54) **Session initiation protocol (SIP) user agent in a serving GPRS support node (SGSN)**

(30) Priority: 19.03.2001 US 277089 P; 19.12.2001 US 27610
(71) Applicant: Siemens Information and Communication Mobile LLC, San Diego, CA 92127 (US)
(72) Inventor: Wang, Chenghui, San DIego, CA 92130 (US)
(74) Representative: Wilding, Frances Ward

(57) **Abstract**

A Session Initiation Protocol (SIP) application server (216) is connected to an SGSN (208) by a SIP user agent (214). The SIP user agent (214) supports the SIP protocol. The system is implemented using a GPRS Attach/Detach state model and a GPRS PDP context state model. When relevant detection points in these state models are encountered, the SGSN (208) provides an indication to the SIP User agent (214), which will determine the necessary action, i.e., trigger the network event to the SIP application server (216), where service logic is invoked and executed. SGSN (208) requested PDP context activation capability is added in order to support push services from the SIP application service. Operator owned PDP context is added in order to provide free services for the mobile end users.

## Description

The present invention relates to telecommunication systems and, particularly, to a system for implementing a Session Initiation Protocol (SIP) User Agent in a Serving GPRS Support Node (SGSN) in a General Packet Radio System (GPRS).

GPRS is a data service for GSM (Global System for Mobile Communication) networks. GPRS is a packet-based technology that allows an end-user to remain constantly connected and to send and receive data at speeds higher than those available for prior circuit-switched technologies.

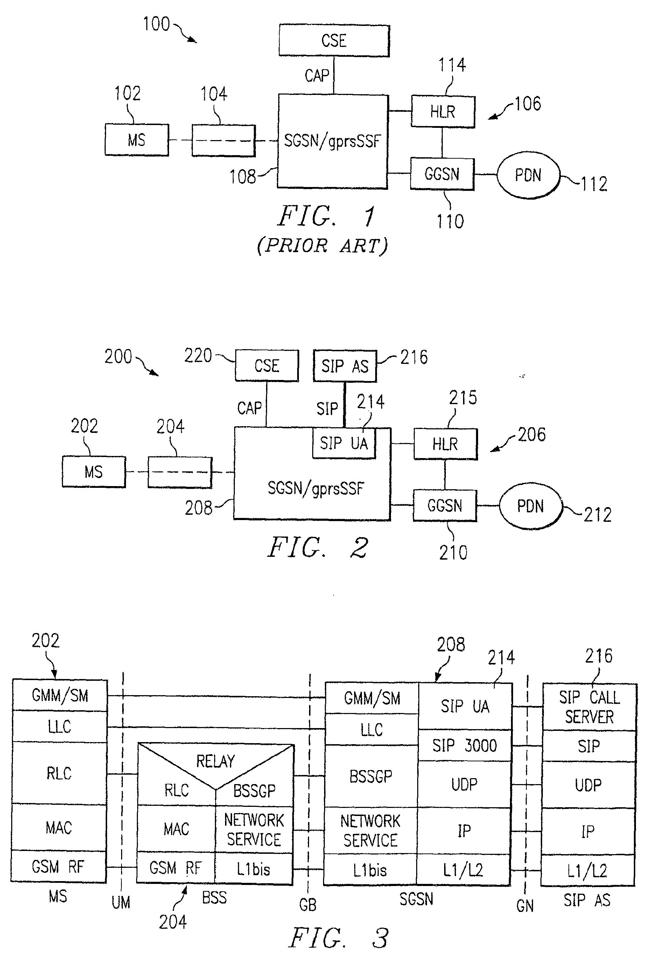

A simplified diagram of a basic GPRS system is shown in FIG. 1. The system 100 includes a mobile station 102, which may be, for example, a notebook computer with a GPRS-capable PC card. The mobile station 102 communicates with a Base Station System (BSS), i.e., GSM Base Station System or Universal Mobile Telecommunications System (UMTS) Terrestrial Radio Access Network (UTRAN) 104. The base station system 104 sends and receives GPRS packets to and from the GPRS network 106. In particular, the base station system 104 sends and receives the GPRS packets to and from a Serving GPRS Support Node (SGSN) 108. The SGSN 108 monitors the mobile stations within its service area and interfaces to the mobile stations 102. The SGSN 108 communicates with a Gateway GPRS Support Node (GGSN) 110 via a protocol called the GPRS tunnel protocol (GTP). The GGSN 110 interfaces to packet data networks (PDN) 112, such as Internet or X.25 networks. When the mobile station 102 sends data, the packets are sent via the SGSN 108 to the GGSN 110, which converts them into the desired format. Packets from the PDN 112 are received at the GGSN 110, then forwarded to the mobile station 102 via the SGSN 108. A Home Location Register (HLR) 114 stores various subscription information.

The GPRS network provides a data rate of over 100 kbps. The data rate would be tripled to up to 384 kbps if the GPRS network is enhanced with EDGE (Enhance Data rate for GSM Evolution) technology. UMTS will further increase the data rate to up to 2 Mbps. The high data rate makes it possible for a mobile user to access to data and multimedia content. GPRS however, does not itself define when and how that content is delivered.

The invention is defined in the independent claims, to which reference should now be made. Preferred features are set out in the dependent claims.

According to one embodiment of the invention, a Session Initiation Protocol (SIP) application server is connected to an SGSN/gprsSSF by a SIP User Agent (UA). The SIP UA supports the SIP protocol. The system is implemented by reusing a GPRS Attach/Detach Finite State Model and a GPRS PDP Finite State Model. When relevant detection points in these state models are encountered, the SGSN provides an indication to the SIP User Agent, which will determine the necessary action, i.e., trigger the network event to the SIP Application Server with SIP request.

According to one embodiment of the invention, the GPRS system supports both SIP Application Server (SIP AS) and CAMEL Service Environment (CSE). In operation, the system determines if a mobile station is to be provided a CAMEL-triggered or a SIP-triggered service, based upon subscription information stored in an HLR or the SGSN configuration. The system then allows the appropriate service to be invoked and executed.

A system according to another embodiment of the present invention implements operator-owned PDP contexts used for operator-initiated services. Such a PDP context activation is triggered by a network event, such as a GPRS network event or a service network event. In a typical case, session management (SM) receives an instruction from a functional entity triggered at the network event and starts the procedure to activate the operator owned PDP context. The GGSN 210 assigns a PDP address, which is an IP address, to the PDP context and sends the address to an application platform so that multimedia contents can be pushed to the corresponding IP address.

A better understanding of the invention is obtained when the following detailed description of embodiments thereof is considered in conjunction with the following drawings in which:
FIG. 1 is a simplified diagram illustrating GPRS network system;
FIG. 2 is a diagram illustrating a GPRS-SIP network according to an implementation of the invention;
FIG. 3 illustrates the control plane with SIP Application Server according to an embodiment of the present invention;
FIG. 4 is a block diagram of a SIP application server according to an embodiment of the present invention;
FIG. 5 illustrates an Attach process according to an implementation of the invention;
FIG. 6 illustrates PDP context activation according to an implementation of the invention;
FIG. 7 illustrates detection points the invention will reuse;
FIG. 8 illustrates a GPRS Attach/Detach finite state model (FSM) the invention will reuse;
FIG. 9 illustrates a PDP context finite state model (FSM) the invention will reuse;
FIG. 10 illustrates SGSN Requested PDP Context Activation according to an implementation of the invention;
FIG. 11 illustrates operation of a SIP application server as a PUSH originator;
FIG. 12 illustrates the SIP application server as a Presence server;
FIG. 13 illustrates push web-based pre-paid recharging;
FIG. 14 illustrates an exemplary SGSN according to an embodiment of the present invention;
FIG. 15 is a flowchart illustrating operation of an embodiment of the present invention; and
FIG. 16 is a flowchart illustrating operation of another embodiment of the present invention.

FIGS. 2-16 illustrate a system and method for providing multimedia content in a GPRS network according to an implementation of the invention.

A diagram of an exemplary GPRS-SIP system according to an implementation of the invention is shown in FIG. 2. The system 200 includes a mobile station 202, which may be, for example, a notebook computer with a GPRS-capable PC card. The mobile station 202 communicates with a Base Station System (BSS), i.e, GSM Base Station System or UMTS Terrestrial Radio Access Network (UTRAN) 204. The base station system 204 sends and receives GPRS packets to and from the GPRS network 206. In particular, the base station system 204 sends and receives the GPRS packets to and from a Serving GPRS Support Node (SGSN) 208. The SGSN 208 monitors the mobile stations within its service area and interfaces to the mobile stations 202. The SGSN 208 communicates with a Gateway GPRS Support Node (GGSN) 210 via a protocol called the GPRS tunnel protocol (GTP). The GTP protocol is over UDP/IP protocols. The GGSN 210 interfaces to packet data networks (PDN) 212, such as Internet or X.25 networks. When the mobile station 202 sends data, the packets are sent via the SGSN 208 to the GGSN 210, which converts them into the desired format. Packets from the PDN 212 are received at the GGSN 210 then forwarded to the mobile station 202 via the SGSN 208. An HLR 215 is provided for subscription information. In addition, the GGSN 210 may communicate with the SIP AS (application server) 216 via an Intranet or the Internet (not shown).

The SGSN 208 further includes an SIP User Agent (SIP UA) 214. The SIP user agent 214 communicates via the Session Initiation Protocol with a SIP Application Server (SIP AS) 216, as will be discussed in greater detail below. Thus, the GPRS 206 supports the multimedia services triggered with SIP requests. More particularly, in the appropriate point in mobile station processing, the SIP user agent 214 is activated to interact with the SIP application server 216 to provide multimedia services to the mobile station.

The SIP application server 216 can co-exist with a standard (Customized Applications for Mobile network Enhanced Logic) service environment (CSE) 220. The CAMEL service environment allows the GPRS network to support services otherwise not supported by GSM, such as Prepaid service. However, CAMEL does not support multimedia services. As will be described in greater detail below, according to one implementation of the invention, the SGSN 208 determines if a network event to be triggered to the CSE 220 or to the SIP AS 216.

### SIP Application Server

The SIP application server control plane is shown in FIG. 3. The SIP protocol is used to transfer signaling messages between the SGSN 208 and the SIP application server 216. The SIP user agent (UA) 214 sends SIP requests to a SIP AS 216, processes the responses and interacts with other functional entities in the SGSN 208.

As will be explained in greater detail below, the SIP application server 216 is a SIP-based service platform, i.e., may be implemented as a SIP proxy/redirect/registrar server enhanced with service logic execution environment, APIs, web server, and media servers. The web server in the SIP AS 216 provides SIP session event triggered web services/applications, as well as HTTP event triggered SIP session service such as click-to-dial. A media server can be an E-mail server or Short Message Service Center, etc. The media servers may not necessarily reside in the same box as the SIP AS 216. A media server provides SIP session event triggered multimedia services, or vice versa, media triggered SIP session services.

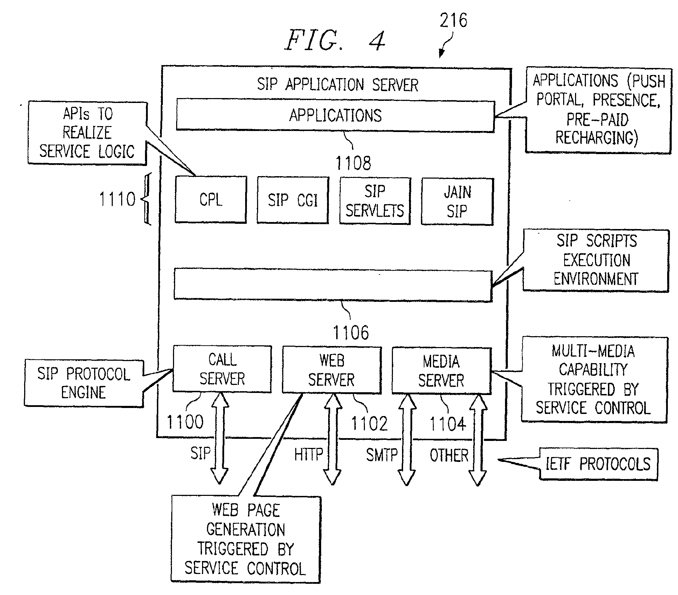

More particularly, FIG. 4 is a diagram illustrating an exemplary SIP application server 216 in accordance with an embodiment of the present invention. The SIP Application Server 216 is a service centric SIP Proxy/Redirect/Registrar Server to provide voice/web/email combined multimedia services. In the embodiment illustrated, the SIP Application Server 216 includes a Call Server 1100, a Web Server 1102, a Media Server 1104, and an Execution Environment 1106. The Media Server 1104 may not necessarily be an integral part of a SIP Application Server. In certain embodiments, the SIP Application Server 216 is able to interface with external Media Servers (not shown) via IETF protocols whether it has internal Media Servers or not.

At the center of the SIP Application Server 216 is the Execution Environment 1106. The Execution Environment 1106 may be any set of software, for example, that decides how to execute SIP scripts. The Execution Environment 1106 receives a request from a Call Server 1100, or Web Server 1102, or Media Server 1104, and maps the incoming request to the corresponding service logic, and then retrieves the service logic and hands it to the corresponding API 1110 for interpretation or execution. The service logic may call the functionality provided by the Call Server 1100, or Web Server 1102 or Media Server 1104 to generate SIP/HTTP/SMTP requests or responses.

In certain embodiments, the SIP application server 216 supports Session Initiation Protocol (SIP), Hypertext Transfer Protocol (HTTP), Simple Mail Transfer Protocol (SMTP), etc. The SIP application server 216 may support other protocols depending on what other media capabilities are desired, and what side channels are required to communication with other application servers.

As a SIP Proxy/Redirect/Registrar Server, the SIP Application Server 216 supports the SIP protocol to handle SIP requests and responses. In addition, it may support various service/application-oriented extensions to the baseline SIP. One is SIP extension of SIMPLE (SIP for Instant Messaging and Presence Leveraging) in order to support Presence and Instant Messaging services, as will be explained in greater detail below.

The Call Server 1100 is a SIP protocol engine that processes SIP requests and responses. The Call Server 1100 may support service/application-oriented extensions to the baseline SIP. Among these are the SUBSCRIBE and NOTIFY messages as specified in SIMPLE, which are used to implement Presence and other services/applications needed to dynamically arm and report a trigger event. The Call Server 1100 inter-works closely with the Execution Environment 1106, for example, in the same SIP Application Server. In typical cases, the Call Server 1100 would hand the incoming SIP message to the Execution Environment 1106 for service/application execution decision. The Execution Environment 1106 would then pass the possibly altered SIP message, controlled by service logic, back to the Call Server 1100 for further processing in the same way as an ordinary SIP Proxy/Redirect/Registrar Server. The Execution Environment 1106, controlled by service logic, may instruct the Call Server 1100 to generate a new SIP message within the current SIP session or to start a new SIP session. In the case of a new SIP session, the triggering event may either come from the Call Server 1100 or from the Web Server 1102 in response to an incoming HTTP request, or from the Media Server 1104.

The Web Server 1102 provides web service capabilities and thus a convenient interface to the mobile subscribers, and also provides them with links to other multi-media services/applications URIs (Uniform Resource Identifiers) in the PDN. There are several ways to use the Web Server 1102 in the SIP Application Server environment. In certain embodiments, the Web Server 1102 is able to dynamically generate a web page as instructed by the Execution Environment 1106 as a result of the execution of the service logic. The Web Server 1102 is able to return the generated web page, or the URL (Uniform Resource Locator) of the web page, to the Execution Environment 1106 to be inserted into a SIP message/response body, which supports Multipurpose Internet Mail Extension (MIME). The web page will then hitch hike in the SIP message to its destination, possibly a mobile subscriber's device, and be rendered there. The Web Server 1102 is also able to "push" the generated web page, through its data network connection, to a URL extracted by the Execution Environment 1106 from header of the incoming SIP message handed over from the Call Server. This functionality can be used to realize the push portal service, and other push services. The other way to use the Web Server 1102 is to use it the same way as an ordinary pull web server. However, the processing of the incoming HTTP request is also forwarded to the Execution Environment 1106 for further service/application execution. The result could be used as a triggering event for a new SIP Session, which the Execution Environment 1106 would instruct the Call Server 1100 to carry on. Such services include 3rd party call control, click-to-dial, etc.

The SIP Application Server is usually equipped with a Media Server 1104 to provide multi-media services. Such multi-media services may include email, instant messaging, audio/video conferencing, unified messaging, voice activated/controlled services, short message service (SMS), etc. The SIP Application Server 216 may interface external Media Servers via IETF protocols. The Media Server 1104 empowers a SIP Application Server 216 with the capability to provide voice/web/email combined multi-media services.

The Execution Environment 1106 is the central part of a SIP Application Server that interconnects all the other components. The Execution Environment 1106 communicates with the Call Server 1100, the Web Server 1102 and the Media Servers 1104. In addition, the Execution Environment 1106 retrieves the service logic of the applications and executes the service logic through appropriate APIs 1110.

When an incoming SIP request enters the SIP Application Server 216, it is received and handled by the Call Server 1100. The Call Server 1100 would then hand the SIP message to the Execution Environment 1106 for service/application execution. The Execution Environment 1106 invokes a mapping function (not shown) to map the SIP request to its corresponding service logic 1108 (application). The Execution Environment 1106 retrieves the service logic 1108. It then analyzes the service logic 1108 and finds out which API 1110 supports this service logic 1108 and then hands the service logic 1108 to the appropriate API 1110 for interpretation or execution. The service logic 1108 may interact with the Call Server, Web Server and/or Media Server via the API 1110.

When processing an incoming HTTP or other non-SIP message, the Web Server 1102 and the Media Server 1104 have their own mapping functions to map the incoming request to the corresponding service logic 1108, for example, in the form of CGI and/or Servlets scripts, and then interpret or execute the script via the appropriate AIP 1110. SIP-enabled APIs 1110 are used to interact with the Call Server.

The Execution Environment 1106 supports one or more SIP-enabled APIs 1110 such as Call Processing Language (CPL), SIP Common Gateway Interface (SIP CGI), SIP Servlets and JAIN SIP, among others. New APIs can be loaded whenever it is needed. The Execution Environment 1106 retrieves the service logic 1108, analyzes the script, and hands it over to the appropriate API 1110 for interpretation or execution. The APIs 1110 support the functionality to interact with Call Server, Web Server and Media Servers.

The applications 1108 (service logic) are developed offline in a Service Creation Environment (SCE). After being tested, they are uploaded to the SIP Application Server 216. An application is stored in the database as service logic in the SIP Application Server. The service logic can be uploaded, activated, deactivated, or even replaced via, for example, via an OAM GUI interface. Applications 1108 are written in script languages supported by the APIs 1110.

### ATTACH Operation and PDP Contexts Activation

As will be described in greater detail below, in operation, a mobile station 202 must first "attach" to the GPRS network and then have the appropriate PDP (packet data protocol) contexts activated before it can use network resources.

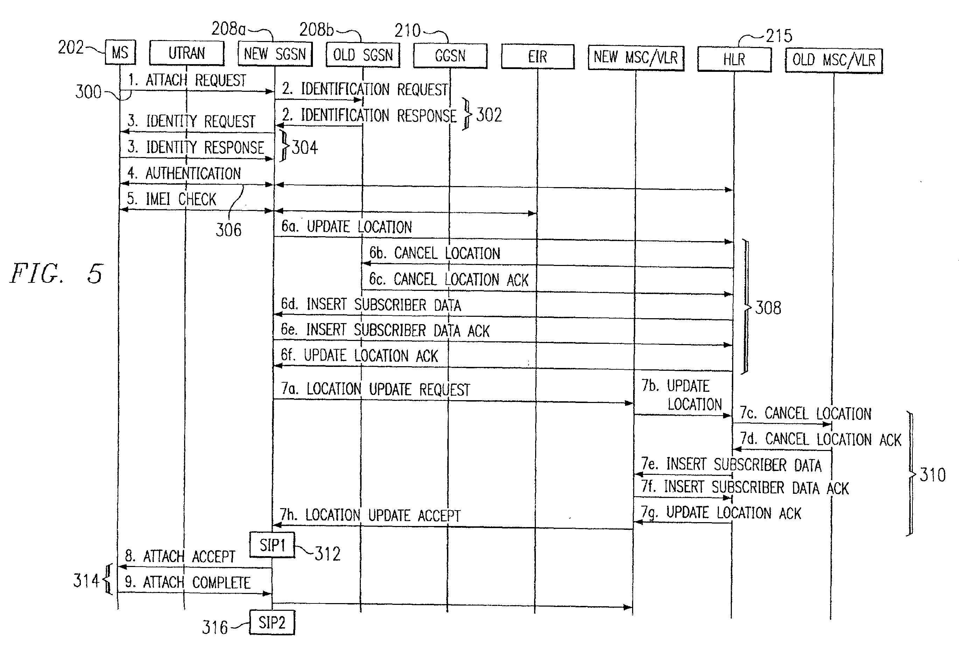

An exemplary Attach process is illustrated in FIG. 5. In step 300, a mobile station 202 transmits an attach request to the new SGSN. In step 302, the new SGSN sends an identification request to the old SGSN, which responds with the Identification Response and the IMSI (International Mobile Subscriber Identity). In step 304, the new SGSN then sends an identity request to the mobile station 202 which responds with its identity. An authentication is then performed in step 306. In step 308, the new SGSN sends an update location to the HLR 215; the HLR 215 and old SGSN cancel the old location; the new subscriber data is inserted and the location is updated. In step 310, a VLR (Visitors Location Register) is updated. In particular, the new VLR sends the update information to the HLR 215, which cancels the old location with the old VLR. The new subscriber data is then inserted. In 312, the SIP interaction may be performed to establish the SIP session. Essentially, the mobile station 202 and the SGSN undertake an exchange acknowledging the presence attempt of the mobile station and that it is reported with a SIP request. In step 314, the attachment to the GPRS network is completed. Finally in 316, a SIP interaction may be performed again to establish the SIP session. The mobile station 202 and the SGSN 208 undertake an exchange acknowledging the presence completion of the mobile station and that it is reported with a SIP request. Upon initial attachment, whether the attach event is reported with CAMEL via gprsSSF, which may interact with the CSE in 312, or with SIP via SIP User Agent, which may interact with the SIP AS in either 312 or 316 or both, is decided based on the subscription information provided through the HLR 215, or the SGSN configuration.

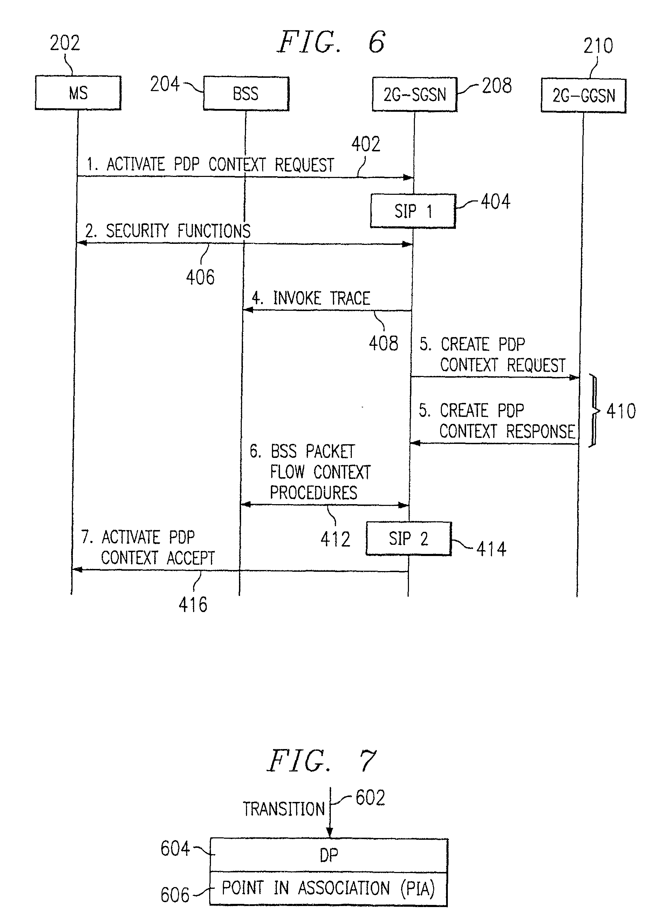

FIG. 6 illustrates the MS-requested PDP context activation procedure according to an implementation of the invention. In step 402, a MS 202 sends a PDP Context activation request message to the SGSN 208. The message contains information such as PDP type, PDP address, access point name, QoS requested, and the like. In 404, a SIP-GPRS-Activate-PDP-Context trigger armed at PDP Context Establishment DP occurs. Briefly, the PDP context activation attempt with any necessary mobile station capability and address information may be provided using the SIP protocol. In step 406, security functions may be implemented. In step 408, SGSN 208 invokes a trace to BSS 204. In step 410, SGSN 208 sends a Create PDP Context Request message to the affected GGSN 210; once created, the GGSN 210 responds to the SGSN 208. In step 412, packet flow context procedures may be executed. In 414, the SIP-GPRS-SGSN-Create_PDP_Context trigger armed at PDP Context Establishment Acknowledgement DP occurs, reporting using SIP protocol the requested SIP PDP context is established. In step 416, the mobile station is notified that the PDP context activation is accepted. Whether the PDP context activation events should be reported in 404 and 414 respectively with CAMEL via gprsSSF or with SIP via SIP User Agent is decided based on the subscription information provided through the HLR 215, or the SGSN configuration.

GPRS supports multiple PDP (packet data protocols) contexts simultaneously for an attached subscriber. Thus, the behavior of a GPRS session is modeled using two finite state models: one for attach/detach procedures and the other for modeling individual PDP context. As will be described in greater detail below, the GPRS state models identify points when operator specific service (OSS) logic instances accessed via the CSE 220 are permitted to interact with basic GPRS control capabilities.

According to one embodiment of the invention, these state models are reused to identify points when service logic instances accessed via the SIP AS are permitted to interact with basic GPRS control capabilities.

In particular, as shown in FIG. 7, components of such state models include transitions 602, detection points (DP) 604, and points in association (PIA) 606. The detection points 604 are points in processing at which notification to the service logic can occur and transfer of control to such logic is possible. The PIAs 606 identify SGSN activities associated with the service logic instances.

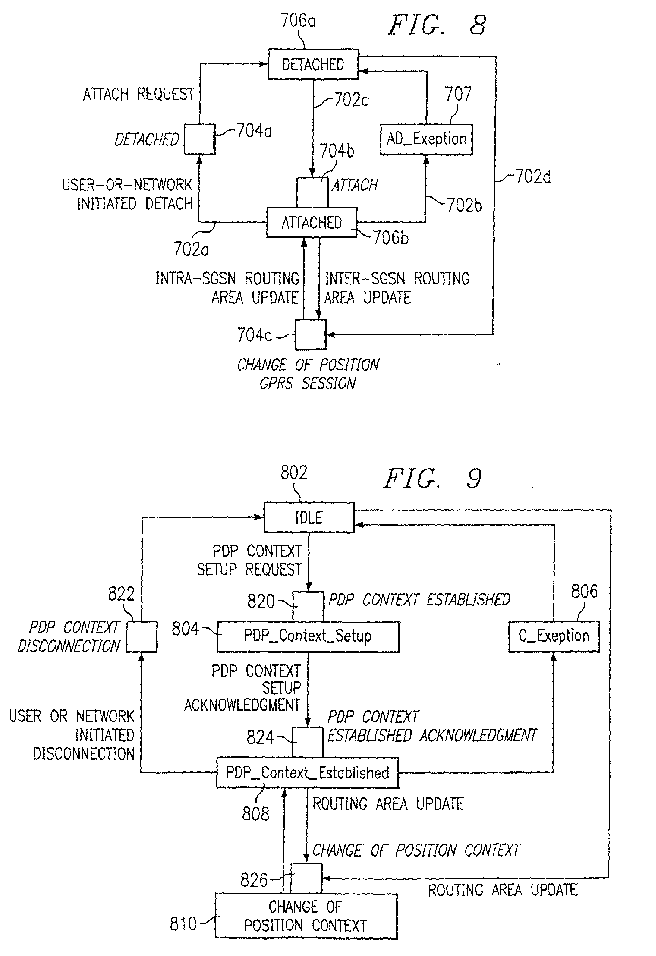

FIG. 8 illustrates the GPRS Attach/Detach FSM used to model the behavior of the GPRS attach/detach procedures according to an implementation of the invention. As seen, the Attach/Detach FSM includes states Detached 706a, Attached 706b, and a transit state AD_Exception 707. Three detection points Detached 704a, Attach 704b, and Change of Position 704c are shown. Finally, transitions 702a-d are provided.

When one of the detection points 704a-704c is encountered, the SGSN will suspend normal processing and indicate the detection point to the gprsSSF (service switching function) for CAMEL treatment or SIP User Agent 216 for SIP treatment. The gprsSSF or SIP UA will determine the necessary action, and trigger the network events to the CSE 220 or to the SIP AS 216 (FIG. 2), where appropriate service logic is invoked and executed. With CAMEL approach, the DP Attach detection point 704b indicates that a request to attach has been received. With SIP approach, the DP Attach detection point 704b may alternatively indicate that the attach request has been successful (but the Attach process is not completed yet). The DP change of position detection point 704c indicates that a routing area update has been accepted, and the DP Detached detection point 706a indicates that a detach request has been received either from the mobile station or the network.

Zero or more PDP Context finite state models are associated with the Attach/Detach FSM when the latter is in the Attached state. Such a context finite state model is illustrated in FIG. 9. Shown are Idle state 802, PDP_context_setup state 804, C_exception state 806, PDP_Context_Established state 808, and change of position context state 810. Also shown are detection points PDP context establishment 820, PDP context disconnection 822, PDP context establishment acknowledge 824, and change of position context 826. When one of the detection points is encountered, the SGSN will suspend normal processing and indicate the detection point to the gprsSSF (service switching function) or SIP UA 214 depending on whether the event is to be reported with CAMEL or SIP. The gprsSSF or the SIP UA 214 will determine the necessary action, and trigger the network events to the CSE 220 or the SIP AS 216, where appropriate service logic is invoked and executed (FIG. 2).

The PDP_context_establishment DP 820 indicates that an activate PDP context request has been received. PDP context establishment acknowledgement 824 indicates a create PDP context response is received from the GGSN 210. PDP context disconnection 822 indicates a deactivate PDP context request and delete PDP context request are received. Change of position 824 indicates a routing area update is received.

### Network Services

According to one embodiment of the present invention, Push Portal, Presence, and Push Web Based Pre-paid Recharging are provided as services for networks in the SGSN 208. Other services/applications can also be developed and deployed.

There are two different ways a content can be accessed. Pull - the client directly requests the content. Push - the client signals its readiness to accept the content, and the other party sends the content to the client without its direct request.

### Push Portal Service

A portal provides mobile subscribers with an integrated and secure web based interface to other Internet contents such as information, application, expertise, etc., which may be provided either by the network operator itself, or by 3rd party content providers. In the wireless world, the visited network operator would like to serve as a portal, which serves as an entrance for the mobile subscriber to enter other sites on the Internet. The portal site provides free services such as search engine, local news, local weather forecast, local traffic situation, local businesses and other local information. Portal advertises the operator's Local Operator Initiated Services to the visited subscribers. Portal service is free, and the advertisement is the major way for the operator to make profit. An ordinary pull wireless portal can not fully satisfies the network operator's needs, because it requires the mobile subscriber to explicitly browse to the URL of the portal site, or pull the contents from the portal site. A pull portal may be provided by 3rd party ASPs rather than by the network operator. The main difficulty for the visited subscribers is they very likely do not know the URL of the portal site, and therefore are not able to browse to the portal site even if they do want to access the local information/service.

For this reason, a push portal service is provided according to embodiments of the present invention. A "push" service is a service that is not specifically requested from the end user, but is directed to the end user's mobile station by the network when the end user signals he is ready to communicate, for example, when he powers on his mobile station. These services are initiated by the service provider and triggered by a network event. Providing the Push Portal service is based on free of charge service given to subscribers and generation of the revenue stream coming from advertising local companies providing content delivery to the portal application. In a typical case, a network event triggers the service and a web page or application window is "pushed" to the subscriber's mobile station. The subscriber then can make use of the web page or window free of charge. The pushed contents are delivered based on an operator owned PDP context, which is free of charge to the mobile subscriber. The activation of an operator owned PDP context is requested either from the SGSN, or from another network entity such SIP AS. An operator owned PDP context has a Charging ID that indicates the operator, rather than the mobile subscriber, should pay for the packets transmitted, the connection time, the QoS, etc., associated with that PDP context. Typically, the subscriber cannot use the operator owned PDP context for his chargeable services, because no address bar is provided in the pushed window.

Such operator owned contexts are typically free of charge to the subscriber, even when the subscriber is a pre-paid service subscriber. As such, when the operator owned context is triggered, a special Charging ID is provided by the GGSN 210, or a Charging ID in a particular range is provided, to ensure that the subscriber is not charged for the service. The home CSE 220 does not charge when it sees the identification.

The offering of the Push Portal service provides to a wireless network Operator an additional possibility for generation of a revenue stream from roaming (and home) subscribers moving around a defined geographical area, e.g. served by a singular SGSN. The network triggers the content delivery upon the mobile station powering on or changing of position (the mobile station enters or moves into an area served by another SGSN) without the mobile subscribers' explicit request.

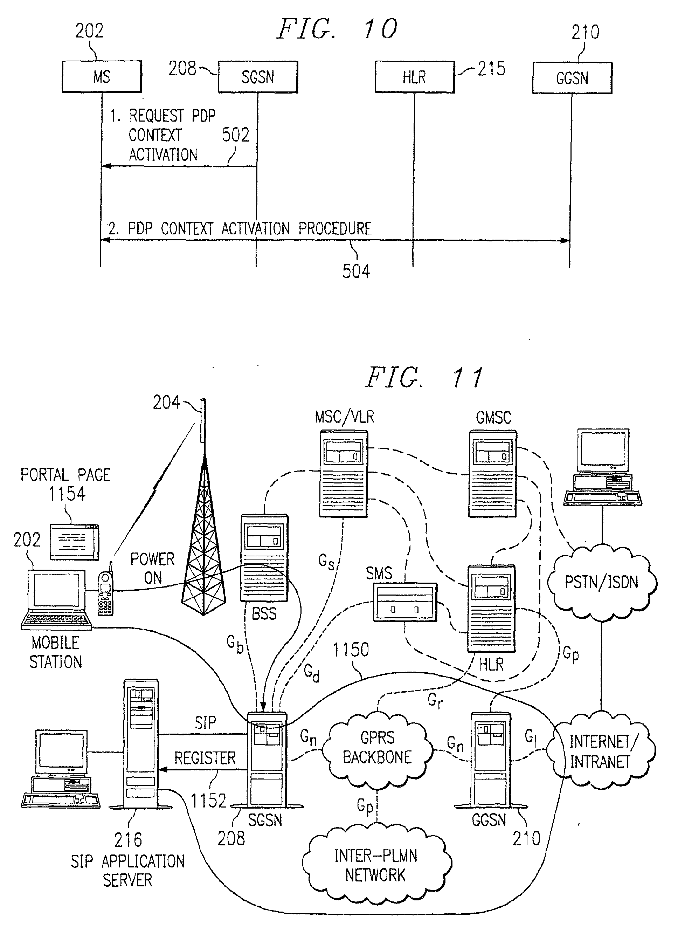

In order to trigger a "push" service at DP Attach and/or other detection points, a SGSN Requested PDP Context Activation is provided. The network may further mark this SGSN requested PDP context as an operator owned PDP context in order that the services provided based on that are free of charge for the mobile subscriber. FIG. 10 illustrates the SGSN Requested PDP Context activation. In step 502, the SGSN 208 sends a Request PDP Context activation request to the mobile station 202. In step 504, the MS 202 undertakes the PDP context activation procedure described above. At DP Attach, if the SGSN 208 decides the trigger of network events is needed, it invokes this procedure before it triggers the event to the SIP application server. The PDP address of the PDP context is the dynamic IP address the SIP application server 216 is to use to push contents to the mobile station 202.

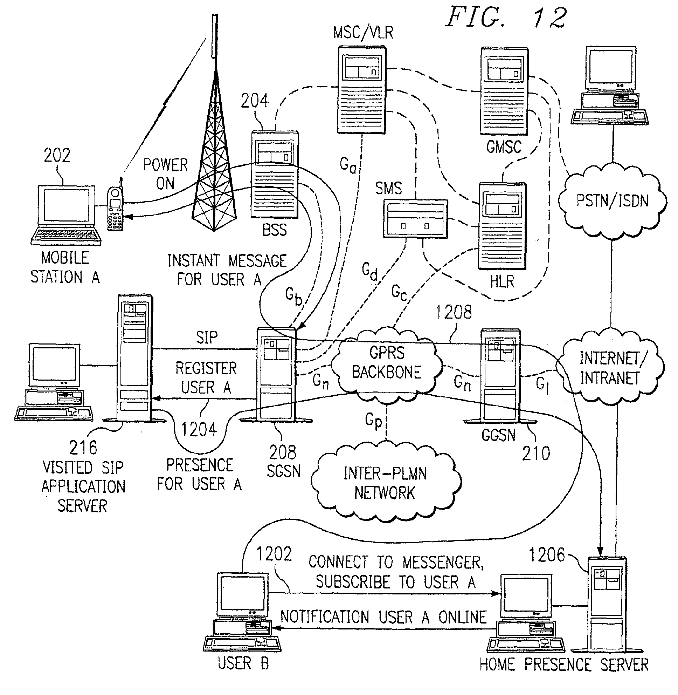

The push portal service triggered at a subscriber's mobile station attachment to the GPRS network is further illustrated in FIG. 11. When the subscriber powers on its mobile station 202, an Attach request 1150 is sent to the network. Once the SGSN 208 intercepts the request, it initiates Operator Owned PDP Context Activation. As noted above, this PDP Context is owned by the network, and is free of charge to the mobile subscriber. The SGSN 208 sends a SIP REGISTER request 1152 to the SIP Application Server (in the same manner as it sends a CAP request InitialDPGPRS to the CSE when using CAMEL). This SIP REGISTER request contains the information such as the PDP Context information for the newly activated Operator Owned PDP Context. Upon receiving the SIP REGISTER request, the SIP Application Server 216, which serves as a push originator, pushes a portal web page 1154 to the mobile station. The automatically triggered Push Portal service by the wireless core network provides a mechanism for a wireless network Operator to advertise the entire available Local Operator Initiated Services and third party contents to the home and roaming subscribers.

The contents being pushed by the Push Server include but are not limited to: (1) Portal services (WAP or HTTP based), like the Portal solution previously described Advertisement; (2) Status of Presence; (3) Operator generated messages; and (4) Information about existing local operator services.

Push Portal service ensures that mobile subscribers receive the content selection defined by the Operator, together with all the corresponding links. Increasing access to the content provided via Push Portal translates into increasing revenue for the operator from the advertisement industry. Pushed operator message services open a channel for the operator to communicate with its mobile subscribers in real time. The automatically pushed information does not require mobile subscribers to memorize specific URL information. In addition, innovative multimedia services associated with Push Server help to reduce subscriber churn.

Push Portal Service is a Local Operator Initiated Service, and is offered free of charge for the subscribers. The local operator may even wish to reward the subscribers for receiving advertisements by offering discounts for regular subscription fee, or generating electronic coupons for advertised goods or services.

However, there could still be some subscribers who prefer not to receive advertisement. For these subscribers the local operator may wish to provide the capability to deactivate and reactivate the local operator's push portal service. Here an application layer solution is described.

A subscriber will receive the push portal the first time he powers his mobile station on at a certain visited network, and will remain receiving it at the subsequent power on until he explicitly deactivates the push portal service from his mobile station. In the web window of the pushed portal, there is a deactivation button. By clicking the button, the subscriber deactivates the push portal services. The subscriber's IMSI or MSISDN will be recorded in the SIP Application Server 216. Next time when the subscriber powers his mobile station on, the SIP Application Server 216 checks his IMSI or MSISDN against the black list table. It does not push a portal page if a match is found. When the subscriber clicks the deactivation button from the pushed portal page, a reactivation bookmark is inserted into his bookmarks, which he can later use to reactivate the push portal service. The assumption is the whole local network shares the same SIP Application Server 216.

### Presence Service

As noted above, a system according to embodiments of the present invention implement "Presence" services. "Presence" refers to the status of a device (devices) a person may use to which communication can be established. For example, it indicates whether a cellular phone is switched on, or if a subscriber is logged on to a PC, etc. Presence services refer to a class of services that make use of the Presence status information. For example, Instant Message is an individual service offering using Presence status information. Many other services can be created on top of Presence status.

Another closely related concept is "Availability." Availability refers to the personal preferences and policies an individual or enterprise specifies for his/their communication services. Availability information allows the mobile subscriber or network administrator to customize when and how to accept communication.

On wireless networks, location information can be incorporated with Presence as an attribute. Therefore, in a broader sense, Presence status actually refers to Presence and Availability status as well as Location Information.

Many services can be built based on presence/availability/location information, such as Buddy List, Auto Conference, Presence Based Directory (intelligent address book), etc.

There could be different levels of presence. It could be a simple power on of mobile subscriber's mobile station, to an explicit message from the mobile subscriber to indicate his availability. Each level of presence represents the subscriber's availability/willingness to accept communication from a certain group. According to embodiments of the present invention, possible events to report the mobile subscriber's presence status include: 1) GPRS Attach event reported from the SGSN to indicate the mobile subscriber has powered on his mobile station; 2) GPRS PDP Context Activation event reported from the SGSN to indicate the mobile subscriber has an open channel to be contacted; 3) Various messages sent explicitly from the mobile subscriber's device, e.g., mobile station or PC or other, to indicate the subscriber's different level of availability/willingness to be contacted; and 4) Further presence status can be established by CSCF (call state control function) registration (application layer registration) event reported from the serving CSCF in an IMS (IP Multimedia subsystem) network to indicate the mobile subscriber has an open channel to undertake a multimedia session.

The presence status is stored in a centralized presence server in the home network regardless which event established the status. SIP SUBSRIBE/NOTIFY message may be used for another party to subscribe to a subscriber's presence status, and/or to be notified of the subscriber's presence status from the presence server. SIP REGISTER and other possible SIP messages are suitable to report a subscriber's presence status to the presence server.

FIG. 12 is an example of presence service where the presence status is established at the subscriber's attachment to the GPRS network. The presence server notifies another user of the presence status change, who previously subscribed to this information.

User B subscribes to User A's presence status by SUBSCRIBE 1202 User A's static IP address or his URI. The subscription is done by contacting User A's home presence server, which is an Application Server (may or may not be SIP enabled). It is assumed that User A was not online yet. Otherwise the Application Server would send notification message right away to User B. When User A powers on, the network (SGSN) intercepts the event and sends a SIP REGISTER 1204 request to the SIP Application Server (visited presence server), which in turn forwards the information to User A's home presence server 1206. The subscription list is checked there and a notification message 1210 is sent to User B. An Instant Message 1208 from User B to User A follows. User B may choose to use other means to contact User A, such as SMS.

### Push Web-Based Pre-Paid Service

As noted above, one aspect of an embodiment of the present invention is push web-based pre-paid recharging service. Pre-paid is one of the most successful services in today's wireless market. Typical current Pre-paid services are based on the CAMEL protocol. CAMEL was originally designed for circuit switching networks, and has since been adapted to serve packet switching network as well. However, the Pre-paid recharging is usually undertaken via a mobile station, or a landline phone, by calling an IVR (Interactive Voice Response) system. The pre-paid recharging can also be undertaken via a PC by accessing a web interface. Both IVR and the web server should interface with the Pre-paid account database. In such systems, Pre-paid recharging can be done on a web interface directly from a mobile station, which requires an explicit browsing to the recharging web site. However, in some cases, a subscriber with account balance below a certain threshold would not be allowed to use wireless resource any more, making it impossible for him to recharge his account this way.

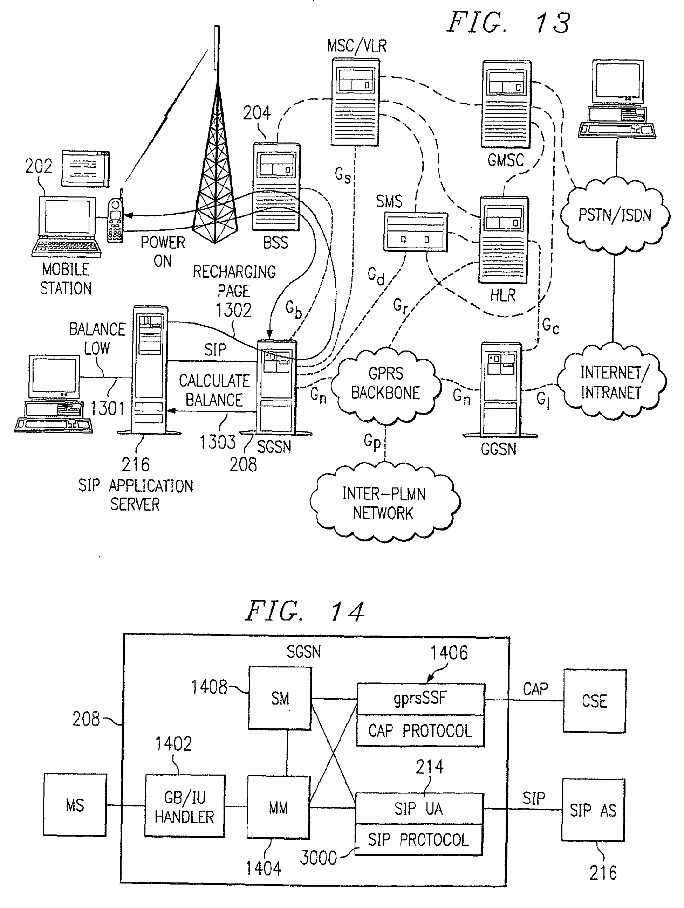

FIG. 13 illustrates a SIP Application Server enabled Pre-paid Recharging service which overcomes these and other problems. This service applies to home subscribers only. The Pre-paid subscriber is notified of his low balance when powering on his mobile station and attaching it to the GPRS network. The notification is delivered in a recharging window 1302 where the subscriber can recharge his account interactively. This recharging service is using an operator owned PDP Context, and is free of charge to the subscriber. This guarantees the subscriber an opportunity to recharge his account even if he has already run out of his balance in his account.

The physical Pre-paid account database does not have to be located on the SIP Application Server 216. The SIP Application Server 216 simply pushes the recharging page, administered by the web server co-located with the Pre-paid recharging server, to the subscriber's mobile station 202. SIP Application Server 216 should be allowed to access the subscriber's account in the existing Pre-paid account database, in order to check the subscriber's account balance.

When the Pre-paid subscriber powers on his mobile station and thus attaches to the GPRS network, the network (SGSN) 208 intercepts this attach event. It sends a SIP REGISTER request 1303 to the SIP Application Server 216, which will then calculate the subscriber's account balance 1301. If the account balance is below a threshold, the SIP Application Server 216 will pushes a Pre-paid recharging web page 1302 to the mobile station 202. It is assumed that the operator owned PDP Context needed for the recharging has already activated (with push portal service). The Web based Pre-paid service provides the possibility to recharge subscriber's account utilizing interactive Web page. The subscriber is able to recharge his account at the beginning or during the active session. In the event that mid-call the subscriber account balance decreases to the allocated threshold, the subscriber is requested to recharge his account on the Web page pushed to his mobile station by the SIP AS 216.

### SGSN and SIP Protocol Stack

As noted above, according to an implementation of the invention, a SIP user agent 214 is provided in the SGSN 208. In operation, when an Attach request from the mobile station is received, the SIP user agent 214 sends a SIP Register request to the SIP AS 216. The Register request contains the IP address of the mobile station. The SIP AS 216 may then push content to the mobile station. When the packet arrives at the GGSN 210, it delivers the content to the mobile station. In case the destination IP address is a permanent IP address (static PDP address) and the PDP Context is not activated, the GGSN 210 has to initiate a Network Requested PDP activation first. On the other hand, if the IP address is a temporary IP address (dynamic PDP address), the corresponding PDP context must have already been activated, either requested by the mobile station, or by the SGSN.

As shown in FIG. 14, in one embodiment of the present invention, the SGSN 208 implements a Gb/lu handler 1402, a Mobility Management function (MM) 1404, a gprsSSF 1406, a Session Management function (SM) 1408, the SIP UA 214, and the SIP Protocol stack 3000, as will be explained in greater detail below.

In what follows, a first embodiment of the present invention employing static PDP addressing will be described, followed by a second embodiment of the present invention employing dynamic PDP addressing.

### Static PDP Address

The Gb/lu handler 1402 may be implemented on the Mobility Management unit 1404 and handles the GPRS Attach process. When the Attach is accepted, but the ATTACH Accept message is not yet sent (the Attach process is successful, but is not yet completed), Gb/lu-Handler 1402 checks if a SGSN configuration flag SIP_AS is set. If the flag is not set, Gb/lu-Handler 1402 proceeds to complete the Attach process in a normal way as defined by CAMEL. Otherwise, it starts to prepare extra parameters for an ATTACH Accept message by scanning the subscriber profile. It returns to the Attach process if no static PDP Address is found from the subscriber profile. Otherwise, it sets a parameter PDP Address with the static PDP address it has found.

The message ATTACH Accept that is to be sent from the Gb/lu-Handler 1402 to the mobile station via MM 1404 may be extended to contain the extra parameters IMSI (or P-TMSI), MSISDN, RAI and PDP Address.

The Gb/lu-Handler 1402 sends the ATTACH Accept message to the mobile station via MM 1404, before it proceeds to complete the Attach process.

Upon receiving the ATTACH Accepted message from the Gb/lu-Handler 1402, MM 1404 examines if the extra parameters IMSI, MSISDN, RAI are PDP Address are contained in the message. If not, it proceeds normally and forwards the message to the mobile station. Otherwise, it extracts and strips off these parameters from the ATTACH Accepted message before forwarding it to the mobile station 202.

The MM 1404 then prepares the new SGSN internal message Start SIP UA with the received parameters IMSI, MSISDN, RAI, and PDP Address as the parameters of the new message. It then sends the Start SIP UA message to the SIP UA 214.

To allow communication between the SGSN 208 and the SIP AS 216, a functional entity SIP UA 214 is added on the SGSN as shown in FIG 14. The main function of the SIP UA 214 is to report the network events to the SIP AS 216 so that services can be triggered, and process the responses sent back from the SIP AS 216. Upon receiving the Start SIP UA message from MM 1404, the SIP UA 214 extracts the MSISDN, RAI and PDP Address parameters from the message and prepares the SIP REGISTER request. The SIP UA 214 then sends the SIP REGISTER request with IMSI, MSISDN, RAI and PDP Address parameters embedded in the message body to the SIP Application Server 216. The SIP UA 214 waits for an OK 200 response from the SIP AS 216 before it closes the dialogue.

Although the SIP AS 216 is located in the same network as the SGSN 208, in certain embodiments, they are not connected via standard Gn interface. Instead, the SIP interface between the SGSN and the SIP AS 216 is placed right on top of UDP/IP. The SIP UA 214 first strips off the GTP layer before it sends the SIP request to the SIP AS 216. This interface is thus referred to as Gn* interface.

As noted above, according to an embodiment of the invention, a SGSN internal message Start SIP UA is defined and contains the following parameters: IMSI; MSISDN; RAI; and PDP Address. The message is sent from MM 1404 to the SIP UA 214.

### Dynamic PDP Addressing

IPv4 supports only a limited address space, and as a result IP addresses are a very valuable resource for mobile operators. Usually a mobile station is not assigned a static PDP address (a permanent IP address) as described above. Instead, an IP address is dynamically assigned (dynamic PDP Address) when a mobile subscriber attaches his mobile station to the wireless network and activates a PDP Context. The Operator Owned PDP Context Activation described herein may be used to accommodate dynamic PDP addressing. Operator Owned PDP Context Activation does not rely on static PDP address because it is not triggered at the incoming PDU (Packet Data Unit), which is routed to the visited network according to the static PDP address contained in the packet header. The Operator Owned PDP Context Activation is requested by the SGSN at some triggering event, e.g., ATTACH event. When the Attach request is accepted, the SGSN reports this event by sending a new internal message to the SIP UA 214. The SIP UA 214 starts the Operator Owned PDP Context Activation procedure. This PDP Context is only to be used with the services defined by the operator, and is free of charge for a mobile subscriber. The SGSN intercepts the dynamic PDP Address the GGSN 210 assigns to the mobile station, which is a temporary IP address, and sends the address to the SIP UA 214. The SIP UA 214 then sends a SIP REGISTER request to the SIP AS 216, containing the dynamic PDP Address in its body. With this PDP Address, the SIP AS 216 can push contents to the mobile station depending on the service logic.

The behavior of the Gb/lu handler 1402 in the dynamic case is generally similar to that in the static case, except Gb/lu-Handler 1402 will continue to process SIP AS 216 request even if no static PDP Address is found. In this case Gb/lu-Handler set PDP Address to zero to indicate dynamic PDP Address is allowed.

Upon receiving Start SIP UA request, SIP UA 214 extracts all the parameters from the message. SIP UA 214 then sends a PDU Notification Request to Session Management (SM) 1408, containing parameters IMSI, PDP Type, PDP Address and APN. IMSI and PDP Address are received from Start SIP UA request, PDP Type is set to IP. APN is provided by SIP UA 214, and it maps to a GGSN 210 in the local wireless network. The purpose for this message is to convey the Operator Owned PDP Context Activation. The SIP UA 214 will store the parameter MSISDN and RAI locally. The SIP UA 214 then waits for PDU Notification Response message from SM 1408.

Once SIP UA 214 has received PDU Notification Response from SM 1408, the dialogue between SM 1408 and SIP UA 214 is closed. SIP UA 214 extracts the PDP Address parameter from the PDU Notification Response message and prepares for a SIP REGISTER request. SIP UA 214 then sends the SIP REGISTER request to SIP Application Server 216, with MSISDN, RAI and PDP Address parameters embedded in the message body. The header fields of the SIP message are set. The SIP UA 214 strips off the GTP layer before it sends the SIP request to the SIP AS 216. Then SIP UA 214 waits for the OK 200 response from the SIP AS 216 before it closes the dialogue.

### Session Management

The Session Management (SM) unit 1408 handles the session related functionality such as PDP Context handling, subscription check, context table management, etc. The Session Management 1408 handles MS Requested PDP Context Activation and Network Requested PDP Context Activation. SM 1408 also handles the Operator Owned PDP Context Activation requested from the SGSN according to the present invention. To do so, SM 1408 has to differentiate these three different types of PDP Context Activation. For the Network Requested PDP Context Activation, SM receives the PDU Notification Request from the GGSN 210; while for the Operator Owned PDP Context Activation, SM 1408 receives the PDU Notification Request from the SIP UA 214. An internal SGSN flag PDPContextType is introduced with valid values to be MS_Requested (null), Network_Requested or Operator_Owned. Upon receiving the PDU Notification Request, the SM 1408 checks the message source. If the message is from the GGSN 210, SM 1408 returns a PDU Notification Response to the GGSN 210, and sets the PDPContextType flag to Network_Requested. On the other hand, if the message is from the SIP UA 214, the SM 1408 will defer the PDU Notification Response to the SIP UA 214. It sets the PDPContextType flag to Operator_Owned. SM 1408 sends a Request PDP Context Activation message to the mobile station via MM, with parameters PDP Type, PDP Address and APN that it has received from the PDU Notification Request. A standard (mobile station Requested) PDP Context Activation then follows.

SM 1408 sends a Create PDP Context Request to the GGSN 210 that contains a parameter Charging Characteristics. Since the purpose of the Operator Owned PDP Context Activation is to create a PDP Context that is free of charge for the subscriber, therefore SM 1408 checks the flag PDPContextType again. If it is set to Operator_Owned, SM sets Charging Characteristics to 'Free of Charge', and sets the indication to be 'default profile determined by the SGSN'.

In the standard MS Requested PDP Context Activation, SM 1408 receives the dynamic PDP Address from the GGSN 210 in the Create PDP Context Response message, in case the mobile station does not have a static PDP Address. Therefore SM 1408 has the knowledge of the PDP Address dynamically assigned by the GGSN 210. Upon completion of the standard PDP Context Activation procedure, SM 1408 sends an Activate PDP Context Accept message to the mobile station. SM 1408 checks PDPContextType flag. If it is set to Operator_Owned, SM 1408 sends the previous deferred PDU Notification Response message to the SIP UA 214, and then closes the dialogue between these two entities. The PDU Notification Response message is extended to contain the extra parameter PDP Address. SM 1408 communicates with both the SIP UA 214 and the GGSN 210 in the Operator Owned PDP Context Activation procedure. SM has to analyze the destination of each message for each destination. The internal message Start SIP UA in the static case is extended to contain extra parameters PDP Type and APN.

In another embodiment, Operated Owned PDP Context Activation is not requested from the SGSN 208, but instead it is requested from the SIP AS 216. When the Start SIP UA message is received, the SIP UA 214 sends the SIP REGISTER request to the SIP AS 216. SIP AS 216 then sends a SIP request, e.g., SIP INFO to query for the IP address. Upon receiving this SIP request, SIP UA 214 sends a PDU Notification Request to SM to start Operator Owned PDP Context Activation. SIP UA 214 returns a SIP INFO message to the SIP AS 216 carrying a PDP Address it receives from SM 1408.

### Signaling Flow

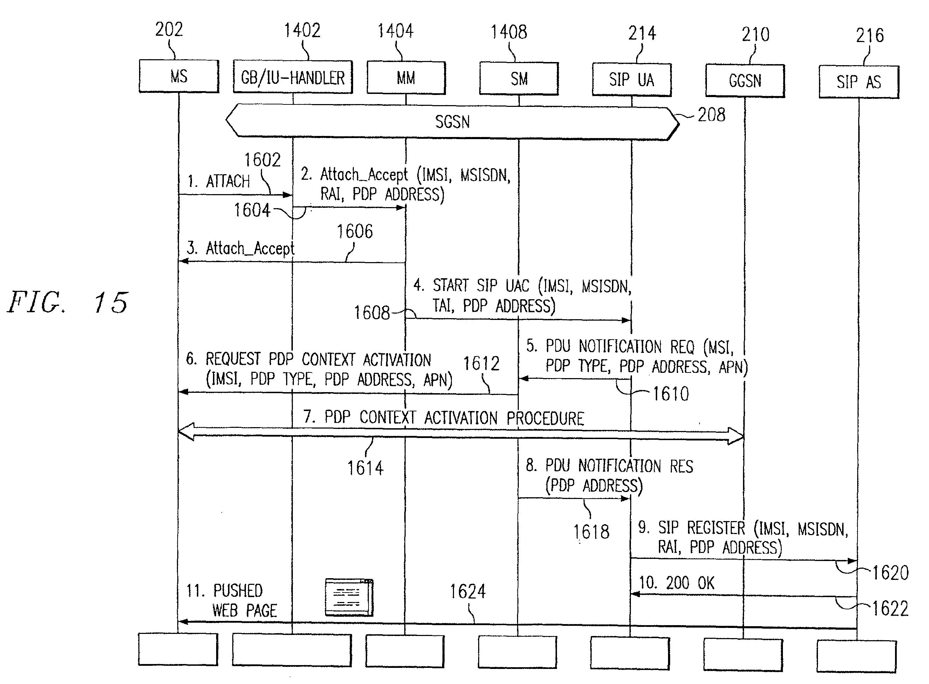

Turning now to FIG. 15, a signaling diagram of operation of an embodiment of the invention as it receives pushed content, such as a Web page, is shown. In particular, FIG. 15 illustrates the signaling upon a mobile station 202 powering on and receiving a pushed content from the network. As shown, in 1602, the mobile station 202 undertakes the Attach at the power on by sending Attach to the SGSN 208. The Gb/lu handler 1402 sends the Attach_Accept message to the MM 1404, in step 1604. The MM responses with Attach Accept 1606 to indicate the attach process is successful. It also issues the internal Start_SIP_UA command to the SIP UA 214, in step 1608. The SIP UA 214 responds with a PDU notification request, in step 1610. The SGSN 208 starts to perform a SGSN Requested PDP Context Activation by sending the mobile station 202 a Request PDP Context Activation 1612, as described above, containing an empty PDP address to indicate dynamic PDP address is allowed. Between the mobile station 202 and the GGSN 210, a PDP Context Activation Procedure 1614 is performed, as described above. In step 1618, the session manager 1408 sends the PDU Notification Response to the SIP UA 214. The GGSN 210 further assigns a dynamic PDP address to the PDP context for the mobile station 202. The information is also intercepted by the SGSN 208. The SGSN 208 then triggers the Attach event to the SIP AS 216 via the SIP UA 214 with a SIP REGISTER request 1620, containing the dynamic PDP address assigned by the GGSN 210. The SIP AS 216 responds to the SGSN 208 via the SIP UA 214 with a SIP 200 OK response 1622 to indicate the SIP REGISTER request 1620 is properly processed in the SIP AS 216. The SIP AS 216 then in step 1624 pushes an appropriate content, decided by its internal service logic, to the destination identified by the IP address, which is the dynamic PDP address it received from the SGSN 208 in step 1620. The content is delivered to the GGSN 210, forwarded to the SGSN 208, and finally reaches its destination mobile station 202.

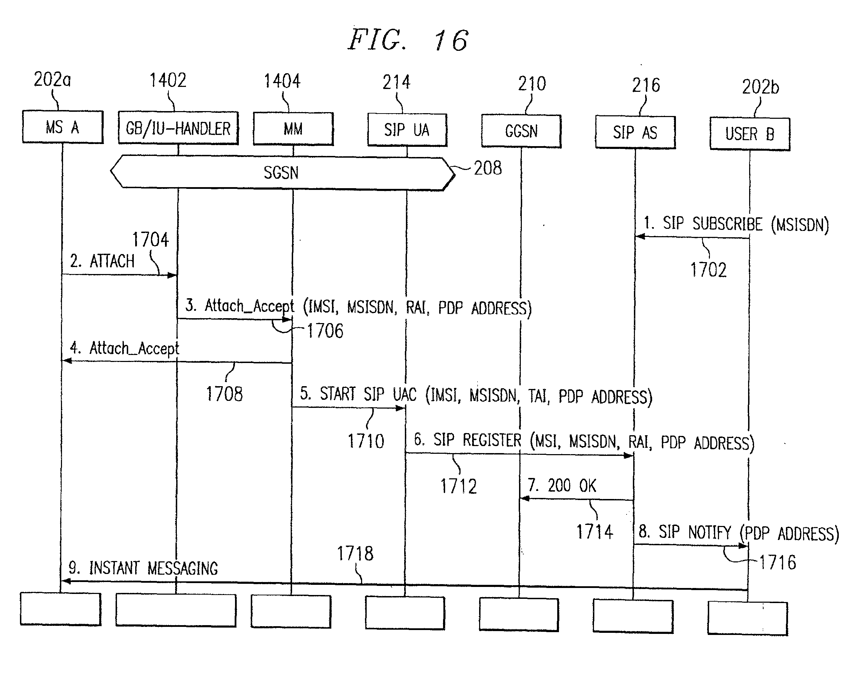

FIG. 16 is a diagram illustrating message flow for a sample Presence Service followed by Instant Messaging. In the example shown, User B 202b subscribes to the presence status of User A 202a at the SIP Application Server 216, which serves as the Presence Server. When the mobile station User A powers on, the SGSN 208 will register to the SIP AS 216 on behalf of the User A. The SIP AS 216 will notify User B of User A's presence.

At step 1702, the User B sends a SIP Subscribe request to the SIP AS 216 to subscribe to the presence status of User A. At step 1704, User A powers on his mobile station and sends an Attach request to the SGSN 208. At step 1706, the Gb/lu handler 1402 sends the Attach_Accept message to the MM 1404. The MM 1404 checks the SGSN internal SIP_AS flag and scans the subscriber profile and sends the Attach accept message to the User A at step 1708. At step 1710, a Start_SIP_UA message is sent to the SIP UA 214. At step 1712, a SIP Register message is sent to the SIP AS 216 that the MS A is successfully attached. At step 1714, the SIP AS 216 responds with an OK message. At step 1716, the SIP AS 216 checks if anyone is to be notified of the presence of MS A, and sends a notify message to User B. Finally, at step 1718, User B starts an Instant Message Application, which triggers a Network Requested PDP context activation. In this case User A is assumed to have subscribed to a static PDP address.

The invention described in the above detailed description is not intended to be limited to the specific form set forth herein, but is intended to cover such alternatives, modifications and equivalents as can reasonably be included within the scope of the appended claims.

## Claims

1. A telecommunications system, **characterized by**:
a Serving GPRS support node (SGSN) (208) adapted to interface to a mobile station (202); and
a gateway GPRS support node (GGSN) (210) adapted to couple to a packet network (212);
wherein said SSGN includes a Session Initiation Protocol (SIP) user agent (214) for interfacing to a SIP application server (216), to provide multimedia services to said mobile station.

2. A telecommunications system in accordance with claim 1, said SGSN (208) adapted to initiate a PDP context activation procedure if said SGSN (208) determines, or an other network function/entity instructs the SGSN (208), that such a PDP context activation is needed to support further services.

3. A telecommunications system in accordance with claim 2, said PDP activation procedure adapted to be implemented at DP attach or other detection points.

4. A telecommunications method, **characterized by**:
processing a detection point attach when the normal GPRS attach process is successful but is not completed;
an SGSN (208) requesting PDP context activation; and
triggering an SIP request.

5. A GPRS telecommunications system, **characterized by**:
a Serving GPRS support node (SGSN (208)) adapted to interface to a mobile station, wherein said SGSN (208) includes a Session Initiation Protocol (SIP) user agent (214);
a gateway GPRS support node (GGSN (210)) adapted to couple to a packet network; and
a SIP application server (216), said SIP user agent (214) and said SIP application server (216) adapted to provide multimedia services to said mobile station.

6. A GPRS telecommunications system in accordance with claim 5, said SGSN (208) and said SIP application server (216) adapted to implement an operator owned PDP context activation.

7. A GPRS telecommunications system in accordance with claim 6, said operator owned PDP activation procedure adapted to be implemented at DP attach or other detection points.

8. A GPRS telecommunications system in accordance with claim 7, said SGSN (208) and said SIP application server (216) adapted to implement push services.

9. A GPRS telecommunications system in accordance with claim 7, said SGSN (208) and said SIP application server (216) adapted to implement presence status.

10. A GPRS telecommunications system in accordance with claim 7, said SGSN (208) and said SIP application server (216) adapted to implement push pre-paid recharging service.

11. A method, **characterized by**:
providing a Serving GPRS support node (SGSN (208)) adapted to interface to a mobile station (202), wherein said SGSN (208) includes a Session Initiation Protocol (SIP) user agent (214);
providing a gateway GPRS support node (GGSN (210)) adapted to couple to a packet network (212); and
providing a SIP application server (216), said SIP user agent (214) and said SIP application server (216) adapted to provide multimedia services to said mobile station (202).

12. A method in accordance with claim 11, said SGSN (208) and said SIP application server (216) adapted to implement an operator owned PDP context activation.

13. A method in accordance with claim 12, said operator owned PDP activation procedure adapted to be implemented at DP attach or other detection points.

14. A method in accordance with claim 13, said SGSN (208) and said SIP application server (216) adapted to implement push services.

15. A method in accordance with claim 13, said SGSN (208) and said SIP application server (216) adapted to implement presence status.

16. A method in accordance with claim 13, said SGSN (208) and said SIP application server (216) adapted to implement push pre-paid recharging service

17. A method in a GPRS network, **characterized by**:
requesting a DP attach from a mobile station to an SGSN (208);
requesting a PDP context activation from said SGSN (208) to said mobile station;
performing a PDP context activation in response to said requesting; and
pushing content to said mobile station.

18. A method in accordance with claim 17, said content **characterized by** one or more Web pages.

19. A method in accordance with claim 18, further **characterized by** implementing push pre-paid recharging service.
